# FASCICULE DE BREVET EUROPEEN

(11) **EP 1 291 532 B1**
(45) Date de publication et mention de la délivrance du brevet: **20.06.2007**
(21) Numéro de dépôt: 02291990.6
(22) Date de dépôt: 07.08.2002
(51) Int. Cl.: F15B 13/04, F15B 13/042

(54) **Dispositif de commande d'un vérin avec soupapes pilotes commandées par membrane**
Steuervorrichtung eines Zylinders mit membrangesteuerten Pilotventilen
Cylinder operating device with diaphragm actuated pilot valves

(30) Priorité: 05.09.2001 FR 0111490
(43) Date de publication de la demande: 12.03.2003
(73) Titulaire: Asco Joucomatic, 92506 Rueil Malmaison Cédex (FR)
(72) Inventeur: Schmidt, Michel, 28360 Prunay le Gillon (FR); Pimouguet, Olivier, 28110 Luce (FR); Gomez, Jean-Pierre, 28300 Amilly (FR)
(74) Mandataire: Peaucelle, Chantal

(56) Documents cités:
- FR-A- 2 328 147
- US-A- 3 794 075
- US-A- 4 169 490
- US-A- 4 711 267

## Description

La présente invention est relative à un dispositif de commande en positionnement d'un vérin simple ou double effet, et de commande en "tout ou rien" d'un vérin simple ou double effet.

De façon connue, les distributeurs d'air comprimé à clapet sont constitués d'un corps de vanne dans lequel débouchent des conduits d'arrivée et de départ de fluides et d'un équipage mobile comportant un clapet jouant le rôle d'obturateur de l'un ou de l'autre desdits conduits. Cet équipage mobile est manoeuvré par un actionneur intégré, soit à piston, soit à membrane, qui comporte généralement un joint de façon à isoler la pression du circuit de pilotage de la pression du fluide à contrôler.

Cette disposition présente l'inconvénient de conduire à la présence de forces de frictions parasites qui peuvent devenir importantes en cas d'usure de ce joint d'isolement.

Par ailleurs, dans les distributeurs à clapet mus par des membranes, il existe généralement à l'intérieur du corps, une pression résiduelle qui agit contre la pression du fluide de pilotage du distributeur. La présence de cette contre-pression a pour désavantage d'augmenter le seuil de basculement et donc le temps de réponse de l'équipage mobile dudit distributeur.

Afin de pallier de tels inconvénients, il existe des dispositifs permettant de contrôler la distribution d'un fluide, fonctionnant sans frottement et qui possèdent un piston à sections différentielles permettant de diminuer le seuil de basculement et le temps de réponse de l'équipage mobile.

A cet égard, on peut se référer notamment à la publication française FR-A-2 328 147 qui décrit un dispositif permettant de contrôler la distribution d'un fluide, comprenant un corps dans lequel peut se déplacer un équipage mobile comportant un piston en appui sur une bille formant clapet, assurant l'obturation de l'une ou de l'autre des conduites d'arrivée et de départ du fluide à contrôler, ledit équipage mobile se déplaçant de l'une à l'autre de ses positions d'équilibre correspondant aux deux positions d'obturation de ladite bille sous la pression d'un fluide de pilotage venant s'appliquer sur une section droite dudit équipage mobile. Dans ce dispositif connu, la surface de la section droite de l'équipage mobile sur laquelle vient s'appliquer la pression du fluide de pilotage est supérieure à celle sur laquelle vient s'appliquer la pression du fluide à contrôler présent dans le corps dudit dispositif.

US-A-4 196 941 fait également connaître un dispositif du type décrit dans la publication FR-A-2 328 147 et comportant en outre une première membrane appliquée de manière étanche sur le corps du dispositif et sur la section droite sur laquelle vient s'appliquer la pression du fluide présent dans le corps de façon à isoler la pression du fluide à distribuer de la pression du fluide de pilotage et, une seconde membrane, appliquée de manière étanche sur le corps du dispositif et sur la section droite sur laquelle vient s'appliquer la pression du fluide de pilotage, de façon à assurer l'étanchéité du dispositif.

Cette configuration connue du piston de l'équipage mobile présentant une section différentielle a notamment pour avantage d'abaisser la pression de basculement et d'améliorer le temps de réponse de basculement de l'équipage mobile : en effet, la pression résiduelle du fluide à distribuer contenu dans le corps du dispositif s'exerce ainsi sur une surface plus petite que celle sur laquelle agit le fluide de pilotage, et la force résultant de cette pression est donc inférieure à celle engendrée par le fluide de pilotage, même à pressions égales.

Dans un tel dispositif connu, on se heurte au problème suivant :

Lors de l'ouverture du clapet, il se produit une entrée de pression sous la membrane (la première membrane) appliquée de façon étanche sur le corps et sur la section droite de l'équipage mobile sur laquelle s'exerce la pression du fluide présent dans le corps, ce qui peut se traduire par une déchirure de cette membrane. En effet, on est amené à utiliser une membrane très mince afin d'obtenir une sensibilité importante, c'est-à-dire un seuil de basculement de l'équipage mobile aussi faible qu'il est possible de l'obtenir par la section différentielle, ce qui ne serait pas possible avec une membrane épaisse.

Le document US-A-3 794 075 s'efforce d'apporter une solution à ce problème technique en proposant un dispositif permettant de contrôler la distribution d'un fluide comprenant :
- un corps dans lequel peut se déplacer un équipage mobile comportant un clapet assurant l'obturation de l'une ou de l'autre des conduites d'arrivée et de départ dudit fluide à contrôler, ledit équipage mobile se déplaçant de l'une à l'autre de ses positions d'équilibre correspondant aux deux positions d'obturation dudit clapet sous la pression d'un fluide de pilotage venant s'appliquer sur une section droite dudit équipage mobile, la surface de cette section droite dudit équipage mobile sur laquelle vient s'appliquer la pression du fluide de pilotage étant supérieure à celle sur laquelle vient s'appliquer la pression du fluide à contrôler présent dans ledit corps dudit dispositif ;
- une première membrane appliquée de manière étanche sur le corps dudit dispositif et sur ladite section droite sur laquelle vient s'exercer la pression dudit fluide présent dans ledit corps de façon à isoler la pression dudit fluide à distribuer de la pression dudit fluide de pilotage et
- une seconde membrane appliquée de manière étanche sur le corps dudit dispositif et sur ladite section droite sur laquelle vient s'exercer la pression dudit fluide de pilotage de façon à assurer l'étanchéité dudit dispositif,
- des moyens, dans son corps qui assurent un appui à la première membrane, ces moyens étant réalisés de façon que toute la surface de ladite première membrane vienne s'y plaquer en en épousant la forme, lesdits moyens étant réalisés sous la forme d'une entretoise qui est positionnée dans le volume du corps délimité par les première et seconde membranes, cette entretoise étant conçue de façon à comporter deux surfaces sur lesquelles prennent respectivement appui les première et seconde membranes, lorsque l'une ou l'autre des positions d'équilibre de l'équipage mobile est atteinte. Ainsi, sont prévus, dans le corps du distributeur, des moyens qui assurent un appui à la membrane, appliquée de façon étanche sur le corps et sur la section droite de l'équipage mobile sur laquelle s'exerce la pression du fluide à distribuer, ces moyens étant réalisés de façon que toute la surface de cette membrane viennent s'y plaquer, en en épousant la forme.

L'invention vise un dispositif de commande d'un vérin à simple ou double effet comportant deux lignes commandant ledit vérin, chacune de ces lignes comportant deux dispositifs tels que définis ci-dessus pour contrôler la distribution du fluide, caractérisé en ce que ces dispositifs de distribution sont montés, dans ledit corps, dans une plaque inférieure et comportent une bride support de pilote et une plaque supérieure, la rotation ou le retournement de ladite bride support de pilote permet d'obtenir un dispositif de commande soit en mode « tout ou rien », soit en mode « positionnement ».
Avantageusement, on prévoit un sélecteur, constituant un système de mise en court-circuit, qui est monté sur la bride support de pilote et dont la position peut être modifiée par rotation ou par retournement de ladite bride afin d'obtenir l'un ou l'autre des modes de fonctionnement mentionnés ci-dessus.

D'autres caractéristiques et avantages de la présente invention ressortiront de la description faite ci-après, en référence aux dessins annexés qui en illustrent un exemple de réalisation dépourvu de tout caractère limitatif. Sur les figures :
- la figure 1 est une vue en perspective du dispositif permettant de contrôler la distribution d'un fluide ;
- la figure 2 représente schématiquement une application du dispositif selon l'invention à la commande en positionnement d'un vérin double effet ;
- les figures 3a et 3b représentent schématiquement une application du dispositif selon l'invention à la commande "tout ou rien" d'un vérin double effet ;
- les figures 4a et 4b représentent deux coupes schématiques d'une application du dispositif selon l'invention à la commande d'actionneurs double effet , ces deux coupes correspondant respectivement à deux modes de fonctionnement ;
- la figure 5 est une vue simplifiée en perspective et en éclaté d'un détail (système anti-respirant) du dispositif de la figure 4 ;
- les figures 6a et 6b sont des vues respectivement en perspective et élévation d'une application de l'invention, à la commande d'actionneurs en mode "tout ou rien" et en mode "positionnement".

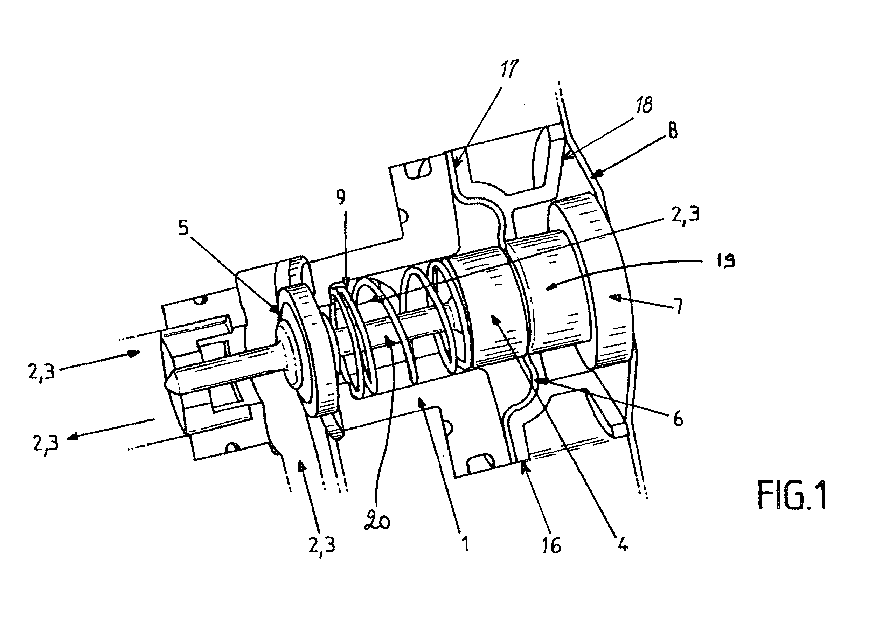

On se réfère en premier lieu à la figure 1 qui représente un dispositif permettant de contrôler la distribution d'un fluide. On voit que ce dispositif est constitué d'un corps 1 dans lequel aboutissent des conduites 2, 3 d'arrivées et de départs de fluides, suivant l'utilisation souhaitée dudit dispositif ("normalement ouvert", "normalement fermé", etc...).

Sur cette figure, on a également désigné, dans son ensemble, par la référence 4, l'équipage mobile dudit dispositif. Celui-ci comporte essentiellement un clapet 5 et un piston en deux parties 7 et 19, le clapet 5 étant relié au piston 7, 19 par une tige 20. L'équipage mobile 4 ainsi constitué, se déplace de l'une à l'autre de ses positions d'équilibre correspondant aux deux positions d'obturation du clapet 5 venant obturer l'une desdites conduites de départ 3 et d'arrivée 2 du fluide à distribuer.

Par ailleurs, une première membrane 6 est appliquée de manière étanche, selon la technique connue rappelée ci-dessus, d'une part sur le corps 1 dudit dispositif, et d'autre part, sur la partie 19 du piston (dont le diamètre est plus petit que celui de la partie 7) de l'équipage mobile 4. Cette première membrane 6 permet ainsi d'isoler la pression du fluide à distribuer de la pression du fluide de pilotage.

De plus, le déplacement de l'une à l'autre de ses positions d'équilibre de l'équipage mobile 4 du dispositif est commandé par le pilotage d'un fluide venant s'appliquer sur la section droite de la partie 7 dudit piston de l'équipage mobile 4. Ainsi, la pression du fluide de pilotage qui s'exerce sur ladite section droite dudit piston de l'équipage mobile 4 permet de basculer ce dernier dans l'une ou l'autre de ses deux positions d'équilibre.

De manière connue notamment par la publication française FR-A-2 328 147, citée ci-dessus, la section droite de la partie 7 dudit piston de l'équipage mobile 4 sur laquelle s'applique la pression dudit fluide de pilotage est supérieure à la section droite de la partie 19 du piston sur laquelle vient s'appliquer la pression du fluide à distribuer présent dans le corps 1 du dispositif selon l'invention.

Cette configuration du piston de l'équipage mobile présentant une section différentielle a notamment pour avantage d'abaisser la pression de basculement et d'améliorer le temps de réponse de basculement dudit équipage mobile.

En effet, la pression résiduelle du fluide à distribuer contenu dans le corps 1 dudit dispositif s'exerce ainsi sur une surface plus petite que celle sur laquelle agit le fluide de pilotage, et la force résultant de cette pression est donc inférieure à celle engendrée par le fluide de pilotage, même à pressions égales.

Le dispositif comporte en outre, comme connu, une seconde membrane 8 appliquée de manière étanche sur le corps 1 dudit dispositif et sur ladite section droite sur laquelle vient s'appliquer la pression dudit fluide de pilotage de façon à assurer l'étanchéité dudit dispositif.

On prévoit, dans le corps 1, des moyens qui sont conçus de manière que la première membrane 6 y prenne appui lorsque l'équipage mobile 4 est soumis à la pression du fluide à distribuer et à contrôler. Ces moyens sont réalisés de manière que toute la surface de la membrane 6 vienne s'y plaquer en en épousant la forme.

Dans l'exemple de réalisation non limitatif illustré par la figure 1, ces moyens sont réalisés sous la forme d'une entretoise 16 qui est positionnée dans le volume du corps 1 délimité par les deux membranes 6 et 8. Comme on le voit sur la figure 1, la forme de cette entretoise 16 est déterminée de façon que toute la surface de la membrane 6 vienne se plaquer sur la surface 17 de cette entretoise, en regard de la membrane, lorsque la pression du fluide à distribuer est admise dans le corps.

Comme illustré par la figure 1, l'entretoise 16 peut également comporter une seconde surface 18, sur laquelle peut prendre appui la seconde membrane 8. Dans cet exemple de réalisation non limitatif, l'entretoise 16 permet l'appui des deux membranes 6 et 8 lorsque l'une ou l'autre des positions d'équilibre de l'équipage mobile 4 est atteinte.

Ainsi qu'on l'a expliqué ci-dessus, cette caractéristique permet d'éviter toute destruction des membranes que pourraient engendrer des surpressions éventuelles.

De préférence, on prévoit également un ressort de rappel 9 entre le clapet 5 et le piston 7, 19 de l'équipage mobile 4 dudit dispositif, et lesdites membranes sont classiquement réalisées à partir d'un tissu enduit d'élastomère, selon une faible épaisseur afin d'obtenir une grande sensibilité (c'est-à-dire un abaissement du temps de réponse du basculement de l'équipage mobile).

On décrira maintenant les différentes applications possibles du dispositif permettant de contrôler la distribution d'un fluide selon l'invention.

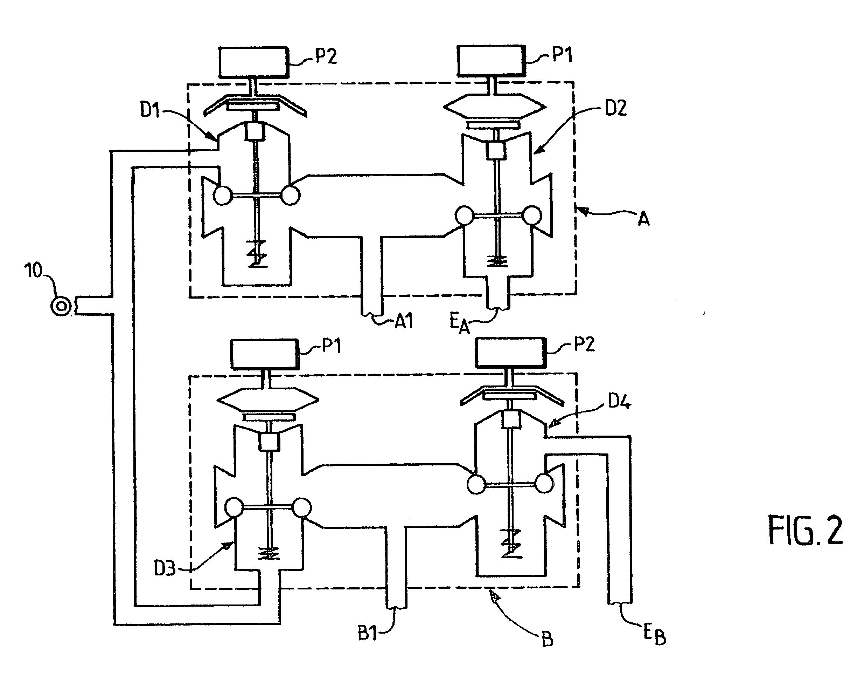

Selon une première application (figure 2), un tel dispositif peut être utilisé pour la commande en positionnement d'un vérin à double effet.

Dans ce dispositif de commande, on utilise quatre dispositifs D1, D2, D3 et D4 selon l'invention couplés par paires de façon à réaliser deux lignes A et B alimentées par un conduit d'arrivée 10 de fluide, deux conduits A1 et B1 permettant d'alimenter alternativement en fluide sous pression les deux espaces situés de chaque côté du piston du vérin. Par ailleurs, deux canaux d'échappement E_{A} et E_{B} sont reliés à une conduite d'échappement commune (non représentée).

De plus, une telle commande en positionnement nécessite l'utilisation de deux pilotes P1 et P2 travaillant en opposition l'un par rapport à l'autre, le pilote P1 actionnant par exemple les dispositifs D2 et D3, et le pilote D2 les dispositifs D1 et D4.

Ainsi, on voit sur la figure 2 que les dispositifs D2 et D3 sont commandés par le pilote P1 de façon que les clapets soient en position haute, tandis que les clapets des dispositifs D1 et D4 actionnés par le pilote P2 sont en position basse.

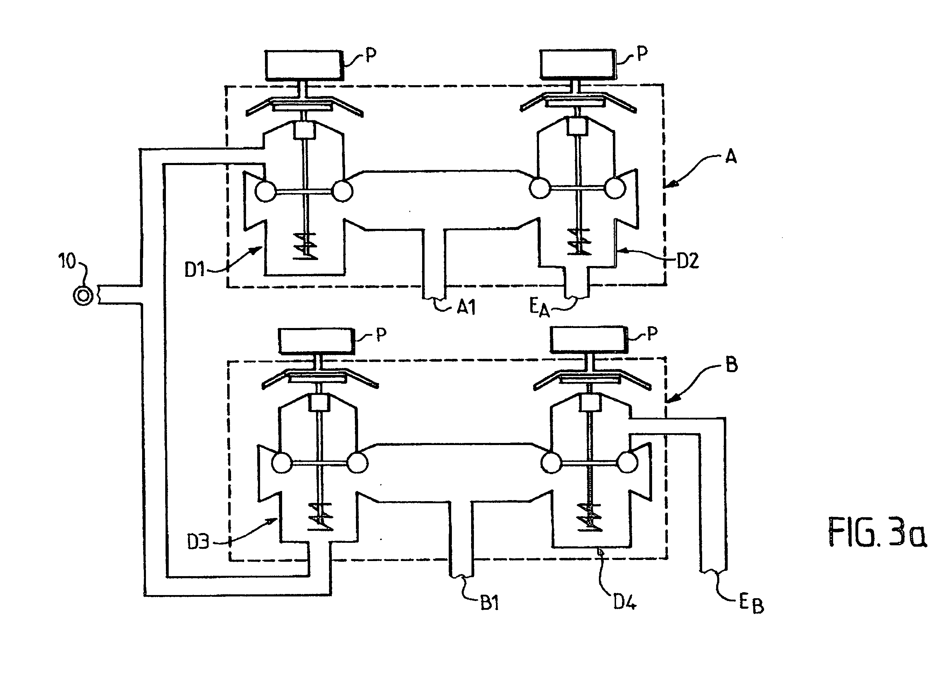

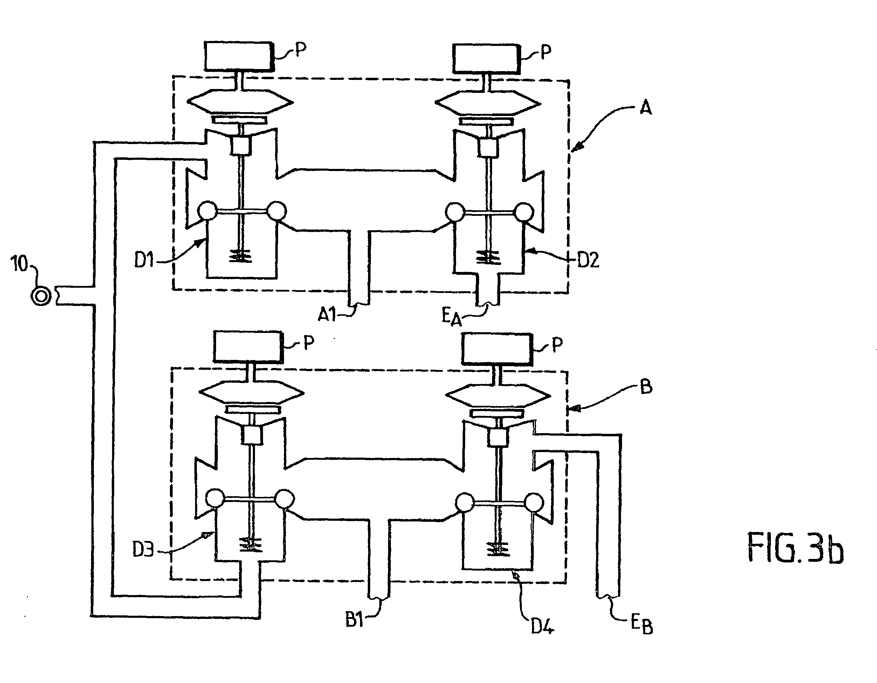

Selon une seconde application illustrée par les figures 3a et 3b, le dispositif selon l'invention est utilisé pour la commande en "tout ou rien" d'un vérin à double effet.

Dans ce dispositif, on utilise un unique pilote P commandant les quatre dispositifs D1, D2, D3 et D4 également disposés en deux lignes A et B alimentées par un conduit d'arrivée de fluide 10 et présentant deux canaux d'échappement E_{A} et E_{B}, deux conduits A1 et B1 permettant d'alimenter alternativement en fluide sous pression les deux espaces situés de chaque côté du piston du vérin.

Sur la figure 3a, on remarque que toutes les membranes des quatre dispositifs sont désactivées, ce qui permet d'évacuer du fluide présent dans l'une des deux chambres du vérin par le conduit A1 et d'en admettre dans l'autre chambre dudit vérin par le conduit B1. Ceci peut par exemple correspondre à une position dite fermée d'un actionneur.

Sur la figure 3b, le pilote 1 active toutes les membranes ce qui permet de libérer du fluide de la chambre dudit vérin alimentée par le conduit B1 et à en admettre dans l'autre chambre correspondant au conduit A1. Cette configuration peut, par exemple, correspondre à une position dite ouverte d'un actionneur.

Ainsi, par exemple comme représenté sur la figure 3a, les dispositifs D1 et D4 sont en position dite "normalement fermés", tandis que les dispositifs D2 et D3 sont en position dite "normalement ouverts".

Par ailleurs, on remarquera que ces différentes applications du dispositif selon l'invention peuvent permettre la commande d'un vérin à simple effet en supprimant simplement la ligne B de ces dispositifs de commande.

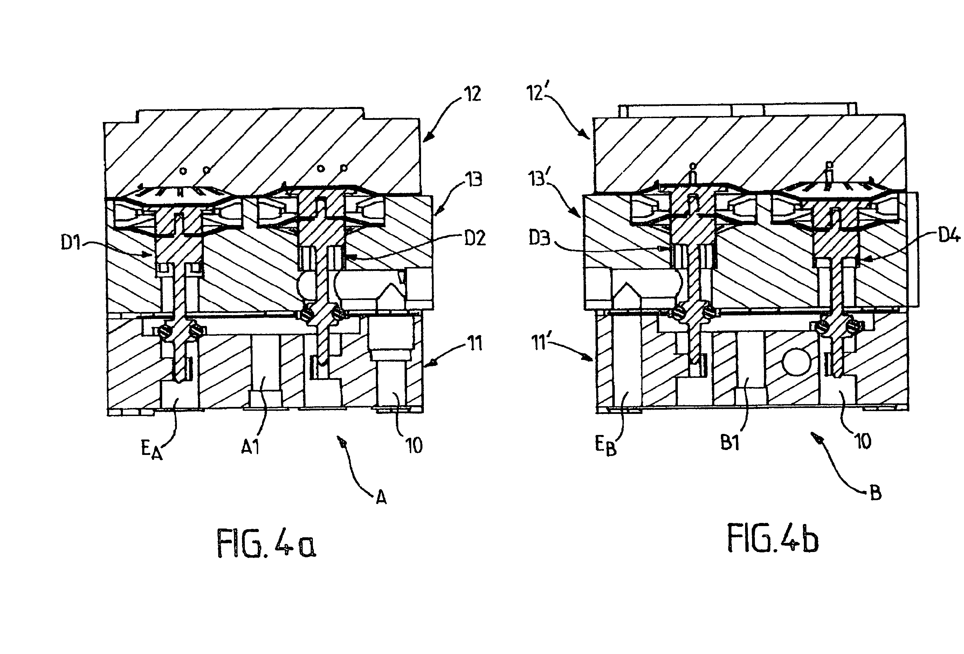

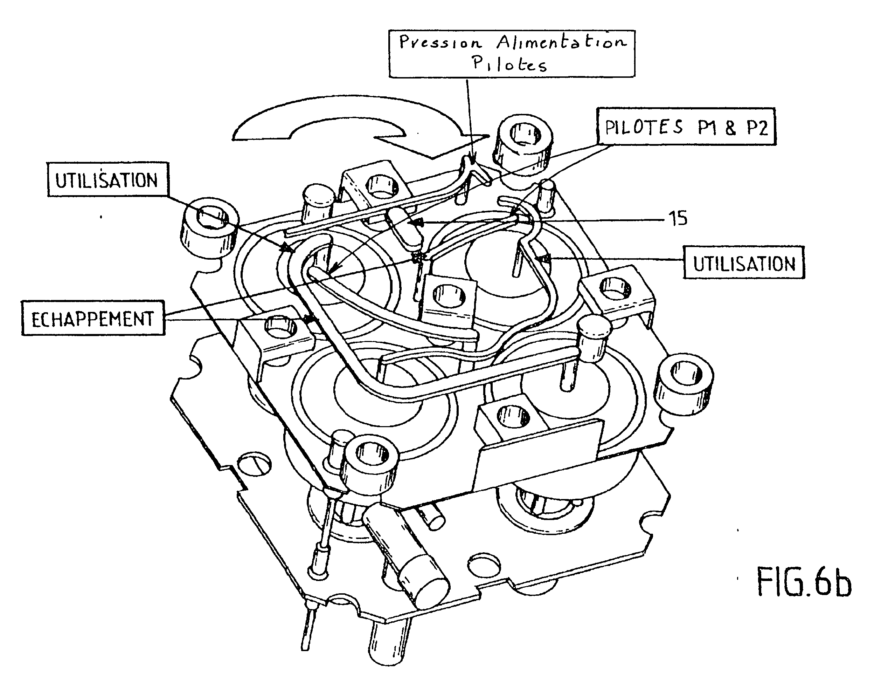

Selon une troisième application du dispositif selon l'invention, celui-ci est utilisé pour la commande d'actionneurs pneumatiques (vérins ou vannes). Une telle application est représentée par les figures 4a et 4b sur lesquelles on voit que le dispositif de commande est constitué de deux lignes A (figure 4a) et B (figure 4b) comprenant chacune deux dispositifs selon l'invention (D1 à D4) montés dans une plaque inférieure (11, 11'), une bride support de pilote (12, 12') et une plaque supérieure (13, 13'). Par ailleurs, les dispositifs distributeur D1 à D4 sont commandés par deux pilotes P1 et P2 (voir figure 6b).

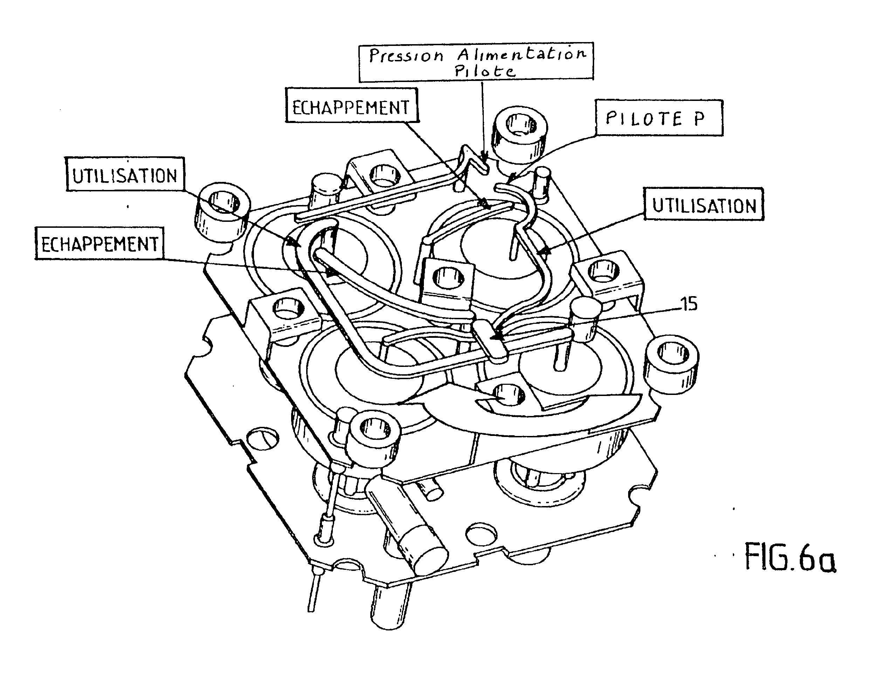

Conformément à une caractéristique de cette invention, par rotation ou retournement de la bride support de pilote (12, 12'), le dispositif permet de commander un actionneur, soit en mode "tout ou rien" (figure 6a) avec l'utilisation d'un unique pilote de commande des dispositifs D1 à D4, soit en mode "positionnement" (figure 6b) avec deux pilotes P1 et P2.

Dans ce but, l'invention prévoit un sélecteur désigné par la référence 15 que l'on a représenté sur les figures 6a et 6b. Ce sélecteur est un système de mise en court-circuit qui est monté sur la bride support de pilote (12, 12') et dont la position peut être modifiée par rotation ou retournement de ladite bride support de pilote, comme on le voit sur ces figures, de façon à passer de la position "tout ou rien" à la position "positionnement".

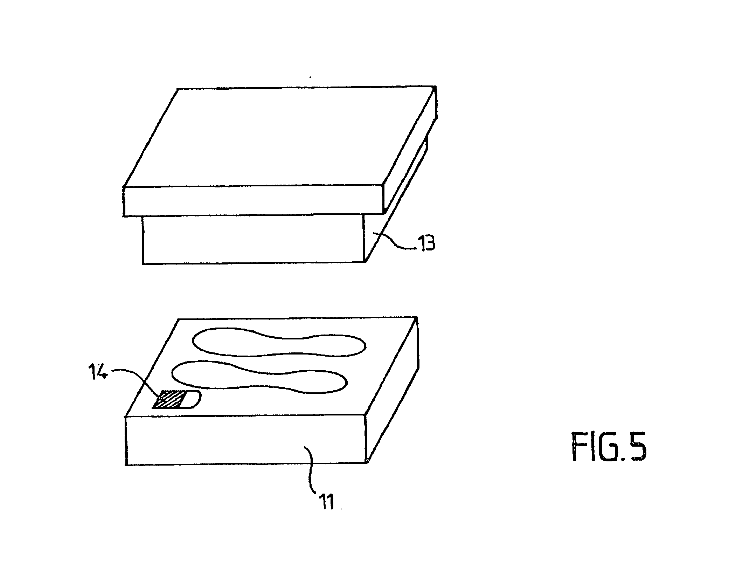

Selon encore une caractéristique avantageuse de l'invention (figure 5), un tel dispositif de commande comporte un dispositif de protection 14 intégré dans la plaque inférieure (11, 11') protégeant la ou les chambres du vérin à simple effet de toute pollution externe.

Ce dispositif de protection connu de l'homme de l'art comme système anti-respirant, permet d'éviter toute rentrée d'air extérieur lorsque l'une des chambres d'un vérin simple effet est en dépression.

Il demeure bien entendu que la présente invention n'est pas limitée aux exemples de réalisation décrits et représentés ci-dessus, mais qu'elle en englobe toutes les variantes. En particulier, en utilisant deux ou quatre dispositifs ouverts ou fermés selon l'invention, on peut réaliser des combinaisons de pilotes normalement ouverts ou fermés.

## Revendications

1. - Dispositif de commande d'un vérin à simple ou double effet comportant deux lignes (A, B) commandant ledit vérin, chacune desdites lignes comportant deux dispositifs (D1, D2 ; D3, D4) permettant de contrôler la distribution d'un fluide, chacun desdits dispositifs (D1, D2; D3, D4) comportant :
- un corps (1) dans lequel peut se déplacer un équipage mobile (4) comportant un clapet (5) assurant l'obturation de l'une ou de l'autre des conduites d'arrivée (2) et de départ (3) dudit fluide à contrôler, ledit équipage mobile se déplaçant de l'une à l'autre de ses positions d'équilibre correspondant aux deux positions d'obturation dudit clapet sous la pression d'un fluide de pilotage venant s'appliquer sur une section droite dudit équipage mobile, la surface de cette section droite dudit équipage mobile sur laquelle vient s'appliquer la pression du fluide de pilotage étant supérieure à celle sur laquelle vient s'appliquer la pression du fluide à contrôler présent dans ledit corps dudit dispositif ;
- une première membrane (6) appliquée de manière étanche sur le corps (1) dudit dispositif et sur ladite section droite sur laquelle vient s'exercer la pression dudit fluide présent dans ledit corps de façon à isoler la pression dudit fluide à distribuer de la pression dudit fluide de pilotage et
- une seconde membrane (8) appliquée de manière étanche sur le corps (1) dudit dispositif et sur ladite section droite sur laquelle vient s'exercer la pression dudit fluide de pilotage de façon à assurer l'étanchéité dudit dispositif,
- des moyens (16), dans son corps (1) qui assurent un appui à la première membrane (6), ces moyens étant réalisés de façon que toute la surface de ladite première membrane vienne s'y plaquer en en épousant la forme, lesdits moyens (16) étant réalisés sous la forme d'une entretoise qui est positionnée dans le volume du corps délimité par les première (6) et seconde (8) membranes, cette entretoise (16) étant conçue de façon à comporter deux surfaces (17, 18) sur lesquelles prennent respectivement appui les première (6) et seconde (8) membranes, lorsque l'une ou l'autre des positions d'équilibre de l'équipage mobile (4) est atteinte,
le dispositif de commande d'un vérin étant **caractérisé en ce que** dans ledit corps (1) lesdits deux dispositifs (D1, D2; D3, D4) de chacune desdites lignes (A,B) sont : montés dans une plaque inférieure (11 ; 11') et comprennent une bride support de pilote (12 ; 12') et une plaque supérieure (13 ; 13'), la rotation ou le retournement de ladite bridé support de pilote (12 ; 12') permettant d'obtenir un dispositif de commande soit en mode « tout ou rien », soit en mode « positionnement ».

2. - Dispositif selon la revendication 1, **caractérisé en ce qu**'il comporte un sélecteur (15) constituant un système de mise en court-circuit, qui est monté sur la bride support de pilote (12 ; 12') et dont la position peut être modifiée par rotation ou retournement de ladite bride de façon à passer de la position « tout ou rien » à la position « positionnement ».

3. - Dispositif de commande selon l'une des revendications 1 ou 2, **caractérisé en ce qu**'il comprend un pilote unique (P) de commande des dispositifs (D1, D2 ; D3, D4), en fonctionnement selon le mode « tout ou rien ».

4. - Dispositif de commande selon l'une des revendications 1 ou 2, **caractérisé en ce qu'**il comprend deux pilotes (P1, P2) de commande des dispositifs (D1, D2 ; D3, D4), en fonctionnement selon le mode « positionnement ».

5. - Dispositif de commande selon l'une quelconque des revendications 1 à 4, appliqué à la commande d'un vérin simple effet, **caractérisé en ce qu**'il comporte un dispositif de protection (14), ou dispositif anti-respirant, conçu de façon à protéger la ou les chambres dudit vérin à simple effet de toute pollution externe, ce dispositif de protection (14) étant intégré dans la plaque inférieure (11 ; 11').

## Claims

1. Device for controlling a single- or double-acting actuator comprising two lines (A, B) controlling the actuator, each of the said lines comprising two devices (D1, D2; D3, D4) for controlling the distribution of a fluid, each of the said devices (D1, D2; D3, D4) comprising:
- a body (1) in which there is able to move a movable element (4) comprising a valve (5) closing off one or other of the inlet (2) and outlet (3) conduits for the said fluid to be controlled, the said movable element moving from one to the other of its equilibrium positions corresponding to the two positions of closure of the said valve under the pressure of a control fluid coming to be applied to a cross-section of the said movable element, the surface area of this cross-section of the said movable element to which the pressure of the control fluid comes to be applied being greater than that to which the pressure of the fluid to be controlled present in the said body of the said device comes to be applied;
- a first membrane (6) applied sealingly to the body (1) of the said device and to the said cross-section on which the pressure of the said fluid present in the said body comes to be exerted so as to isolate the pressure of the said fluid to be distributed from the pressure of the said control fluid, and
- a second membrane (8) applied sealingly to the body (1) of the said device and to the said cross-section on which the pressure of the said control fluid comes to be exerted so as to ensure the imperviousness of the said device,
- means (16) in the body (1) that provide a support to the first membrane (6), these means being produced so that the entire surface of the said first membrane comes to be pressed thereon whilst following its shape, the said means (16) being produced in the form of a strut that is positioned in the volume of the body delimited by the first (6) and second (8) membranes, this strut (16) being designed so as to comprise two surfaces (17, 18) on which the first (6) and second (8) membranes respectively bear, when one or other of the equilibrium positions of the movable element (4) is reached,
the control device of an actuator being **characterised in that**, in the said body (1), the said two devices (D1, D2; D3, D4) of each of the said lines (A, B) are mounted in a bottom plate (11; 11') and comprise a control support flange (12; 12') and a top plate (13; 13'), the rotation or turning over of the said control support flange (12; 12') making it possible to obtain a control device either in "two state" mode or in "positioning" mode.

2. Device according to claim 1, **characterised in that** it comprises a selector (15) constituting a short-circuiting system, which is mounted on the control support flange (12, 12') and whose position can be modified by rotating or turning over the said flange so as to pass from the "two state" position to the "positioning" position.

3. Control device according to one of claims 1 or 2, **characterised in that** it comprises a single pilot (P) for controlling the devices (D1, D2; D3, D4), in operation according to the "two state" mode.

4. Control device according to one of claims 1 or 2, **characterised in that** it comprises two pilots (P1, P2) for controlling the devices (D1, D2; D3, D4), in operation according to the "positioning" mode.

5. Control device according to any one of claims 1 to 4, applied to the control of a single-acting actuator, **characterised in that** it comprises a protection device (14), or anti-breathing device, designed so as to protect the chamber or chambers of the said single-acting actuator from any external contamination, this protection device (14) being integrated in the bottom plate (11, 11').

## Patentansprüche

1. Steuervorrichtung eines einfach oder doppeltwirkenden Zylinders mit zwei Leitungen (A, B), welche den Zylinder steuern, wobei jede der Leitungen zwei Vorrichtungen (D1, D2; D3, D4) aufweist, welche die Verteilung eines Fluids ermöglichen, wobei jede der Vorrichtungen (D1, D2; D3, D4) aufweist:
- einen Körper (1), in welchem ein bewegbares Teil (4) verschiebbar ist, das ein Ventil (5) aufweist, welches das Verschließen der Einlassleitung (2) oder der Auslassleitung (3) des zu regelnden Fluids gewährleistet, wobei sich das bewegbare Teil unter dem Druck eines Steuerdrucks, der auf einen Querschnitt des bewegbaren Teils wirkt, von der einen in die andere seiner Gleichgewichtspositionen verschiebt, die den beiden Schließpositionen des Ventils entsprechen, wobei die Fläche des Querschnitts des bewegbaren Teils, auf welche der Druck des Steuerfluids wirkt, größer als diejenige ist, auf welche der Druck des in dem Körper der Vorrichtung vorhandenen zu regelnden Fluids wirkt;
- eine erste Membran (6), die derart dichtend an dem Körper (1) der Vorrichtung und an dem Querschnitt, auf den der Druck des in dem Körper vorhandenen Fluids einwirkt, anliegt, dass der Druck des zu verteilenden Fluids von dem Druck des Steuerfluids isoliert ist, und
- eine zweite Membran (8), die dichtend an dem Körper (1) der Vorrichtung und an dem Querschnitt, auf den der Druck des Steuerfluids einwirkt, anliegt, um die Dichtigkeit der Vorrichtung zu gewährleisten,
- Einrichtungen (16) in ihrem Körper (1), die eine Stütze für die erste Membran (6) gewährleisten, wobei die Einrichtungen derart ausgebildet sind, dass die gesamte Fläche der ersten Membran sich unter Anpassung an die Form daran andrückt, wobei die Einrichtungen (16) in Form eines Abstandhalters ausgebildet sind, der in dem Volumen des Körpers angeordnet ist, das durch die erste (6) und die zweite Membran (8) begrenzt ist, wobei der Abstandhalter (16) derart ausgebildet ist, dass er zwei Flächen (17, 18) aufweist, an denen sich die erste (6) bzw. die zweite Membran (8) abstützen, wenn die eine oder die andere der Gleichgewichtspositionen des bewegbaren Teils (4) erreicht ist,
wobei die Steuervorrichtung eines Zylinders **dadurch gekennzeichnet ist, dass** die beiden Vorrichtungen (D1, D2; D3, D4) jeder der beiden Leitungen (A, B) in dem Körper (1) in einer unteren Platte (11; 11') montiert sind und einen Steuerungs-Stützflansch (12; 12') und eine obere Platte (13; 13') aufweisen, wobei das Drehen oder das Zurückholen des Steuerungs-Stützflanschs (12; 12') das Erhalten einer Steuervorrichtung ermöglicht, die entweder im "Ein/Aus"-Modus oder im "Positionierungsmodus" arbeitet.

2. Vorrichtung nach Anspruch 1, **dadurch gekennzeichnet, dass** sie eine ein Kurzschlusssystem bildende Wähleinrichtung (15) aufweist, die auf dem Steuerungs-Stützflansch (12,; 12') angebracht ist und deren Position durch Drehen oder Zurückholen des Flanschs derart verändert werden kann, dass ein Übergang von der Stellung "Ein/Aus" in die Stellung "Positionieren" erfolgt.

3. Steuervorrichtung nach einem der Ansprüche 1 oder 2, **dadurch gekennzeichnet, dass** sie eine einzige Steuereinrichtung (P) zum Steuern der Vorrichtungen (D1, D2; D3, D4) im Betrieb nach dem "Ein/Aus"-Modus aufweist.

4. Steuervorrichtung nach einem der Ansprüche 1 oder 2, **dadurch gekennzeichnet, dass** sie zwei Steuereinrichtungen (P1, P2) zum Steuern der Vorrichtungen (D1, D2; D3, D4) im Betrieb nach dem "Positionierungsmodus" aufweist.

5. Steuervorrichtung nach einem der Ansprüche 1 bis 4, angewandt auf die Steuerung eines einfach wirkenden Zylinders, **dadurch gekennzeichnet, dass** sie eine Schutzvorrichtung (14) oder Luftansaugverhinderungsvorrichtung aufweist, die derart ausgebildet ist, dass sie die Kammer oder die Kammern des einfach wirkenden Zylinders vor jeglicher externen Verunreinigung schützt, wobei die Schutzvorrichtung (14) in die unter Platte (11; 11') integriert ist.
